# EUROPEAN PATENT SPECIFICATION

(11) **EP 1 974 890 B1**
(45) Date of publication and mention of the grant of the patent: **14.12.2016**
(21) Application number: 07425176.0
(22) Date of filing: 26.03.2007
(51) Int. Cl.: B29C 45/40, B29C 33/76

(54) **A REDUCED HEIGHT APPARATUS FOR THE MANUFACTURE OF INJECTION MOULDED PLASTIC PARTS**
VORRICHTUNG MIT REDUZIERTER EINBAUHÖHE FÜR DIE HERSTELLUNG VON SPRITZGUSSTEILEN
DISPOSITIF A ENCOMBREMENT EN HAUTEUR RÉDUIT DE FABRICATION D'ARTICLES MOULÉS PAR INJECTION

(43) Date of publication of application: 01.10.2008
(73) Proprietor: Tecnostampi S.r.l., 21040 Gornate Olona VA (IT)
(72) Inventor: Conte, Dino, 21040 Gornate Olona (Varese) (IT)
(74) Representative: Colombo, Stefano Paolo

(56) References cited:
- EP-A1- 1 777 050
- EP-A2- 0 700 766
- DE-A1- 10 048 894
- JP-A- 7 266 384
- JP-A- 8 174 607
- JP-A- 10 024 424
- JP-A- 60 157 820
- KR-A- 20020 095 653

## Description

The present invention relates to the sector of manufacturing plastic parts by means of injection-moulding. In particular, the present invention relates to an improved apparatus for the injection-moulding of plastic parts.

For the purposes of the present invention, the term "part" comprises any object, of any shape and any size, which may be made of plastic by means of an injection-moulding process. In particular (but this not being intended to limit in any way the meaning of the term), the term "part" used in the present description and in the claims refers to a vehicle component, for example a bumper fender, a bumper cross-piece, a dashboard or the like.

For the purpose of the present patent application, the terms "plastic" or "plastic material" are understood primarily as meaning a material other than metal and in particular is understood as meaning a substantially thermoplastic material with elongation at break values ≥ 50% (during tensile tests on test pieces at 5 mm/min.) such as polycarbonate, polyester, polybutylene terephthalate, polypropylene, polyamide and derivatives thereof, EPDM-reinforced polypropylene or the like and any combination thereof. By way of a specific example, a plastic material which is particularly suitable for being moulded in order to produce vehicle parts is XENOY^{®} PC/PBT which is marketed by GE Plastics. This material is already known in the motor car industry and ensures optimum resistance to petrol as well as a high resistance to impacts - also at low temperatures - and durability over time.

A known apparatus for the injection-moulding of plastic parts comprises two main components: one component called "cavity" and another component called "core". Moulding of the desired part is performed by joining under pressure the cavity with the core, all of which preceded by injection of liquefied plastic. In the apparatus for the injection-moulding of plastic parts an ejection zone which is situated in the bottom part of the core, between the core and the back plate, is defined. An ejection plate and a set of oil-hydraulic pistons are situated in this ejection zone. The set of oil-hydraulic pistons is able to raise the ejection plate in the direction of the cavity or bring it back into the starting position.

The body of the oil-hydraulic pistons is fixed to the back plate. Typically, the stem of the oil-hydraulic pistons is fixed, by means of tierods, to the ejection plate. Actuation of the oil-hydraulic pistons causes the movement of the ejection plate.

A known set of oil-hydraulic pistons for an apparatus for the injection-moulding of plastic parts comprises four oil-hydraulic pistons which are arranged in a symmetrical configuration. Each oil-hydraulic piston operates in the region of a respective lug projecting from the ejection plate. In other words, the ejection plate of the known apparatus has a substantially rectangular shape, but projecting parts are formed on the long sides, substantially in the vicinity of the corners. Two rigid rods connected together by means of a connecting plate are fixed precisely to each of these projecting parts. The top end of the stem of a piston is also fixed to the connecting plate. When the stems of the oil-hydraulic pistons are extracted, the rigid rods cause the ejection plate to move correspondingly.

A known set of oil-hydraulic pistons of the abovementioned type is illustrated, for example, in the patent US 5,869,112.

EP 1,588,823 A (Laepple August GmbH & Co.) discloses a device for the manufacture of injection-moulded parts.

EP 1,407,869 A (Liteco Srl) discloses a standardized modular system for moulds of injection-moulding machines.

DE 100 48 894 A1 (Sumitomo Chemical Co.,Ltd) discloses a clamp device for an injection-moulding machine.

US 2005/0280188 (Cecchin Euclide et al.) discloses a core block split into common parts.

EP1777050 was filed on 17.10.2006 and published on 25.04.2007 and claims a priority date of 18.10.2005; its content as filed is therefore considered to be comprised in the state of the art relevant to the question of novelty, pursuant to Article 54(3) EPC. It discloses a mould with four actuating members out of the mould profile.

A known apparatus for the injection-moulding of plastic parts with the above-described set of four oil-hydraulic pistons is normally efficient and allows the production of moulded parts with a high degree of precision.

However, the Applicant has perceived the need to improve the above-described apparatus and in particular to provide a reduced height, more compact and lightweight apparatus.

According to the present invention, the gibs are eliminated. Advantageously, the core frame is shaped in such a way as to comprise a recess for the ejection plate. This, advantageously, reduces the stroke thus rendering the moulding operation quicker than in the known apparatus. At the same time this solution allows to reduce the dimensions (height) and the weight of the apparatus.

Secondly, the Applicant has perceived the need to reduce the complexity and the costs associated with the set of oil-hydraulic pistons.

According to a preferred embodiment, there are only two oil-hydraulic pistons fixed to the back plate and to the ejection plate along the short sides of the latter and in such a way that the oil-hydraulic pistons are situated within the mould. According to another embodiment, only one oil-hydraulic central piston can also be provided.

Therefore, according to embodiments of the invention, the number of oil-hydraulic pistons is reduced from four to two or, in case, also to one.

According to the present invention, an apparatus for the manufacture of injection-moulded plastic parts is provided. The apparatus comprises: a back plate (core side), a core, a core frame fixed to said back plate, an ejection plate and a set of ejection pistons for moving said ejection plate with respect to said back plate, characterized in that a) the core frame is shaped in such a way as to comprise a recess for the ejection plate, b) said ejection plate is arranged between said core and said core frame, c) said set of ejection pistons consists either of a single oil-hydraulic central piston or of a first and a second oil-hydraulic pistons situated within the mould profile.

According to the invention, the core frame is shaped in such a way as to comprise a recess for the ejection plate.

According to a first embodiment, the core frame is made as one piece and is worked in such a way as to form the above recess.

According to a second embodiment, the core frame is made as two or more pieces suitably shaped which, when they are joined together, form the above recess.

According to an advantageous embodiment, the first and the second oil-hydraulic piston are situated along a middle longitudinal plane of the apparatus.

The oil-hydraulic pistons may partially be inset in the thickness of the back plate.

The invention will be described in detail hereinbelow with reference to the accompanying sheets of drawings in which:
- Figure 1 shows part of a known moulding apparatus;
- Figure 2 shows part of a moulding apparatus according to a first embodiment of the present invention;
- Figure 3 is a longitudinal section through a moulding apparatus according to a first embodiment of the present invention;
- Figure 4 is a top plan view of the moulding apparatus according to Figure 2;
- Figure 5 shows part of a moulding apparatus according to a second embodiment of the present invention;
- Figure 6 is a longitudinal section of a moulding apparatus according to the second embodiment of the present invention;
- Figure 7 is a top plan view of the moulding apparatus according to Figure 5;
- Figure 8 shows part of a moulding apparatus according to a third embodiment of the present invention;
- Figure 9 is a longitudinal section of a moulding apparatus according to the third embodiment of the present invention; and
- Figure 10 is a top plan view of the moulding apparatus according to Figure 8.

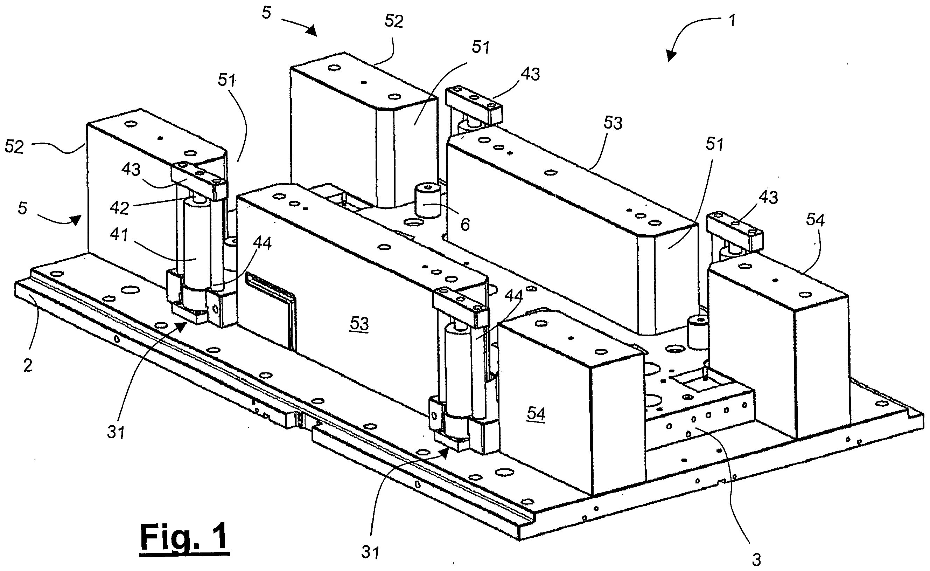

Figure 1 shows some parts of a known moulding apparatus 1. In particular, the figure shows a back plate 2, an ejection plate 3, four oil-hydraulic pistons 4 for raising the ejection plate 3 and two sides 5. For the sake of simplicity, other parts of the apparatus 1, such as the core frame, core and cavity, have not been shown.

The back plate 2 is flat and has a rectangular shape. The four oil-hydraulic pistons 4 and two sides 5 are fixed to it. Each side 5 is formed by three parts or gibs. The total number of gibs is therefore six. Spacers 6, typically with a circular cross-section, are also fixed to the back plate 2. The oil-hydraulic pistons 4, the sides 5 and the spacers 6 all extend perpendicularly with respect to the back plate 2 from a same side thereof.

The ejection plate 3 has a rectangular shape, but has four lugs 31 projecting from its two long sides. Basically, the ejection plate 3 of the known apparatus 1 has the form of a double cross, where the arms of the double cross consist of the projecting lugs 31.

Two openings 51 are formed along each of the sides 5, between the gibs. Expressed in other words, each side 5 consists of three parts (52, 53, 54). Each opening 51 along the sides is wide enough for allowing the lugs 31 of the ejection plate 3 to pass through.

The body 41 of each piston 4 is fixed to the back plate 2 in the vicinity of a respective opening 51. The end of the stem 42 of each piston 4 is fixed to a bridge-like connecting element 43. In turn, each bridge-like connecting element 43 is fixed to a pair of rods 44. The other end of the rods 44 is fixed to the ejection plate 3 in the region of the projecting lugs 31.

As mentioned above in the introduction, by pumping fluid into the oil-hydraulic pistons 4, the stem 42 moves outwards from the body 41 of the piston and the ejection plate 3 is separated from the back plate 2.

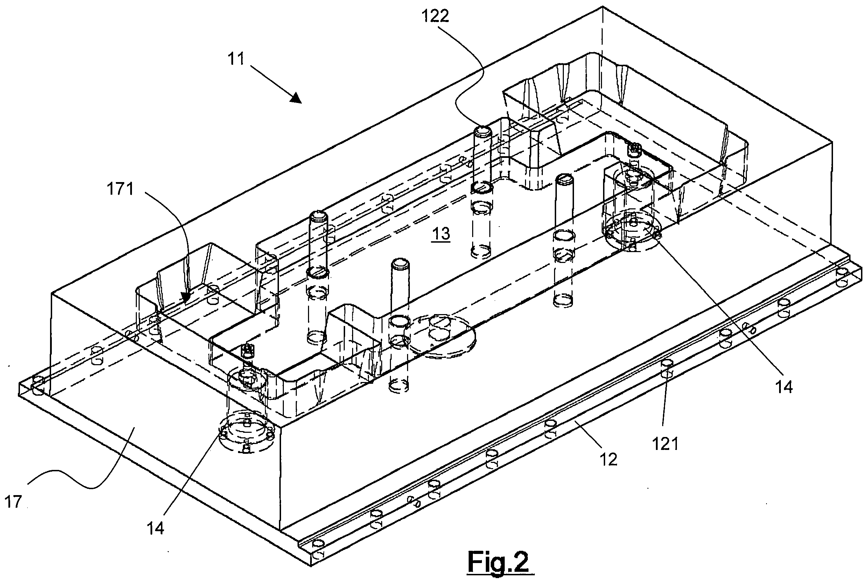

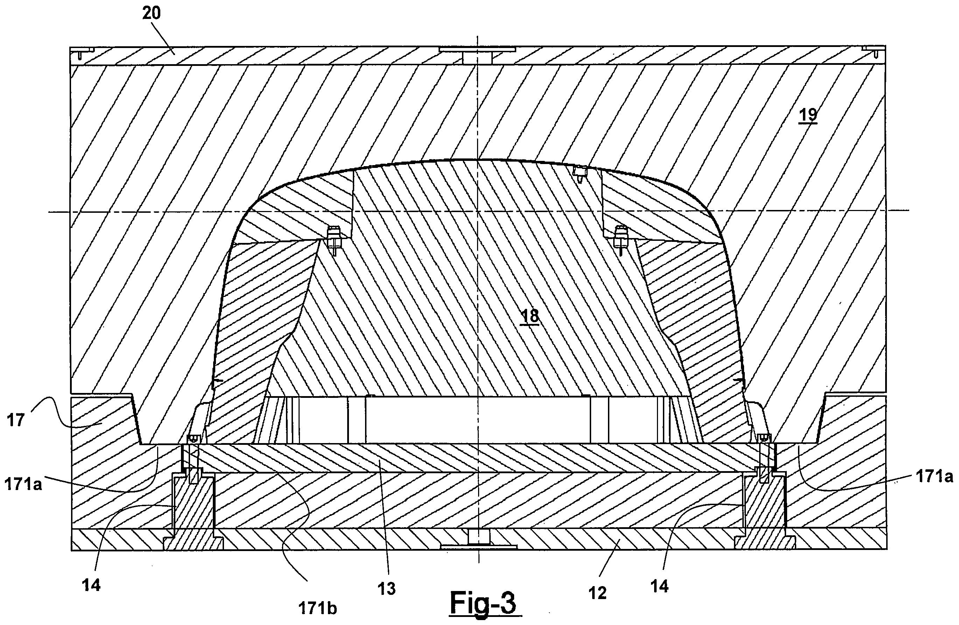

In a similar manner to Figure 1, Figure 2 shows some parts of a moulding apparatus 11 according to a first embodiment of the present invention. In particular, this figure shows a back plate 12 (core side) with holes 121 for fixing to a press (not shown), an ejection plate 13, two oil-hydraulic pistons 14 for raising the ejection plate 13 and the core frame 17. For the sake of simplicity, also in this case, other parts of the apparatus 11, such as the core and cavity (which are however visible in Figure 3) have not been shown.

The oil-hydraulic pistons 14 are shown with dotted lines as though they are covered by the core frame and the ejection plate. The guides 122 projecting perpendicularly out from the back plate are partially shown with dotted lines as well.

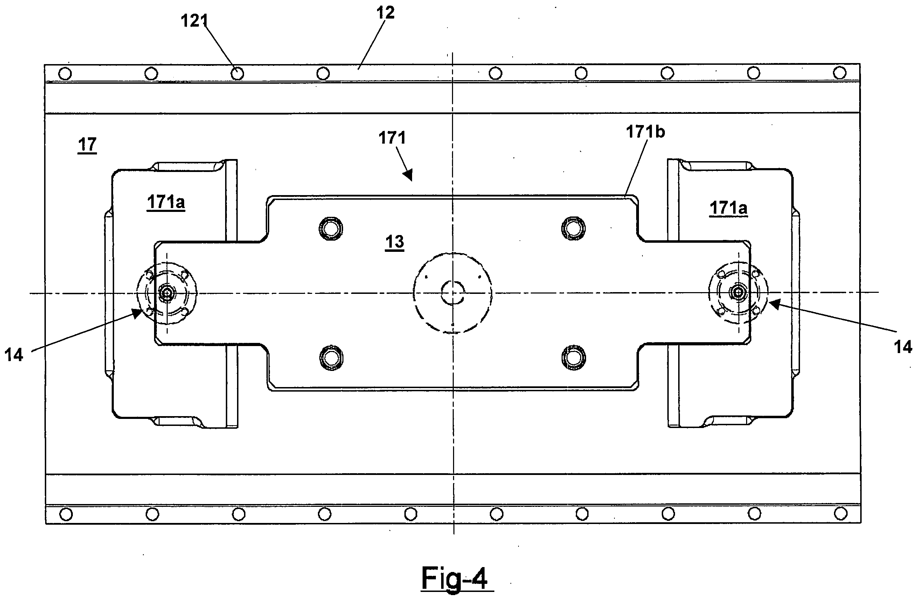

The shape of the core frame 17 reminds that of a parallelepiped. Internally a recess 171 is provided. In particular, the recess 171 is up to a first depth (this part of the recess 171 is shown with reference number 171 a) along the ends of the core frame 17 and up to a second depth (this part of the recess 171 is shown with reference number 171b) along the middle part. The second depth is useful in order to house the ejection plate 13. The shape of the two-depth recess is clearly shown in Figure 4.

Figure 4 also clearly shows the shape of the ejection plate 13. Such a shape can remind that of a rectangle, in which the sides are narrower than the middle part. At the outer ends of the ejection plate there are the two oil-hydraulic pistons 14. Four circular cross-sectioned guides perform the traversing movement of the ejection plate.

The back plate 12 is substantially flat and has a substantially rectangular shape. The two oil-hydraulic pistons 14 and the core frame 17 are fixed thereto.

The oil-hydraulic pistons 14 able to raise the ejection plate 13 are advantageously positioned, opposite each other, along the shorter sides of the ejection plate 13. Preferably, they are situated in the centre of the short sides of the ejection plate 3. In other words, they are positioned along a longitudinal axis of the apparatus 11 within the mould.

The two oil-hydraulic pistons 14 are fixed to the back plate in any suitable manner, for example using fixing means of the threaded type or by means of welding. Conveniently, the two oil-hydraulic pistons 14 are fixed to the back plate by means of fixing screws. They may be fixed to the face of the back plate 2 which faces the ejection plate 3 or may be inset (as shown in the cross-section of Figure 3) in the thickness of the back plate 12.

In the known apparatus according to Figure 1, the core frame was positioned above the gibs and therefore the stroke of the ejection plate had to be longer than that performed by the ejection plate of the apparatus according to the present invention, which is inset in the core frame. In other words, the height of the apparatus according to the present invention is reduced than that of the known apparatus.

The core frame according to the present invention can be made as one piece, as shown in the various figures, or as two or more pieces. In the former case, the recess referred to above is obtained by working a workpiece. In the latter case, the recess is obtained by suitably and separately working every single piece and, once they are joined together, they form the core frame 17 according to the invention. Advantageously, the whole apparatus 11 according to the first embodiment turns out to be more closed and protected than the known apparatus. In particular, the two oil-hydraulic pistons 14 are situated within the mould profile.

Figure 3 shows a part of a longitudinal section, in the region of the oil-hydraulic pistons 14, through the apparatus 11 according to the first embodiment of the present invention.

Figure 3 shows, in relation to the first embodiment, the back plate 12 (core side), the ejection plate 13, the core frame 17, the core 18 and the cavity 19 which define between them the mould cavity. The pistons 14 are also shown cross-sectioned. Reference number 20 indicates the back plate on the side of the cavity.

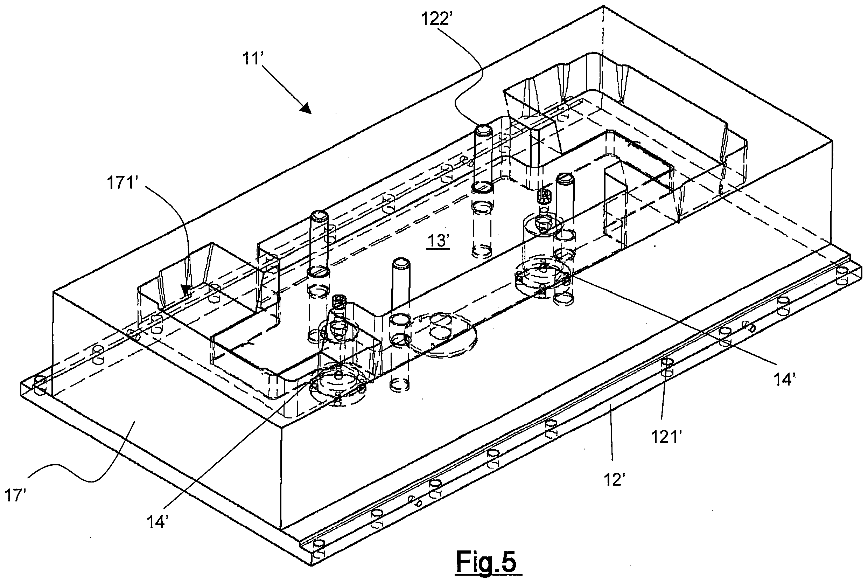

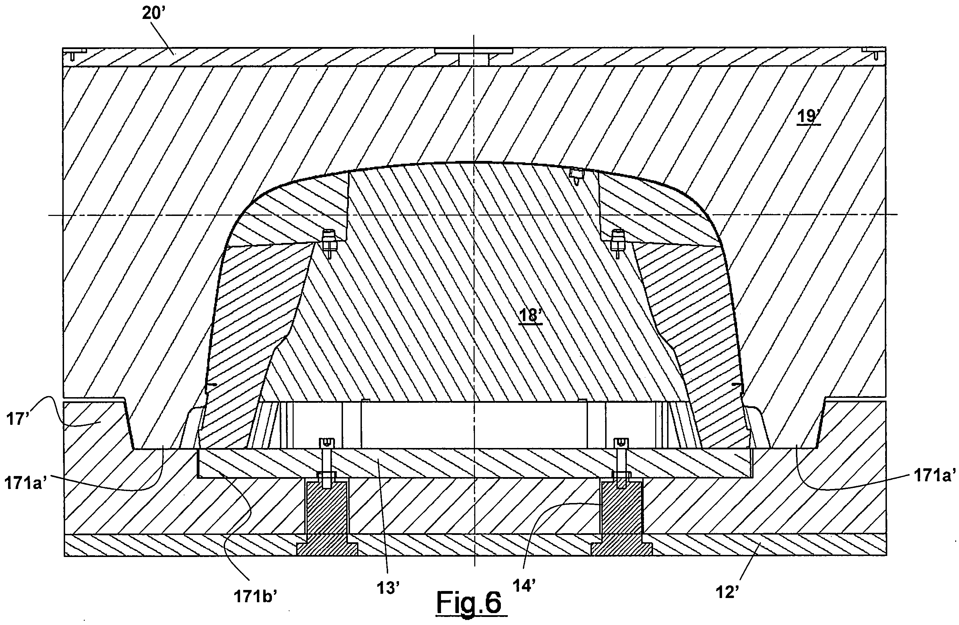

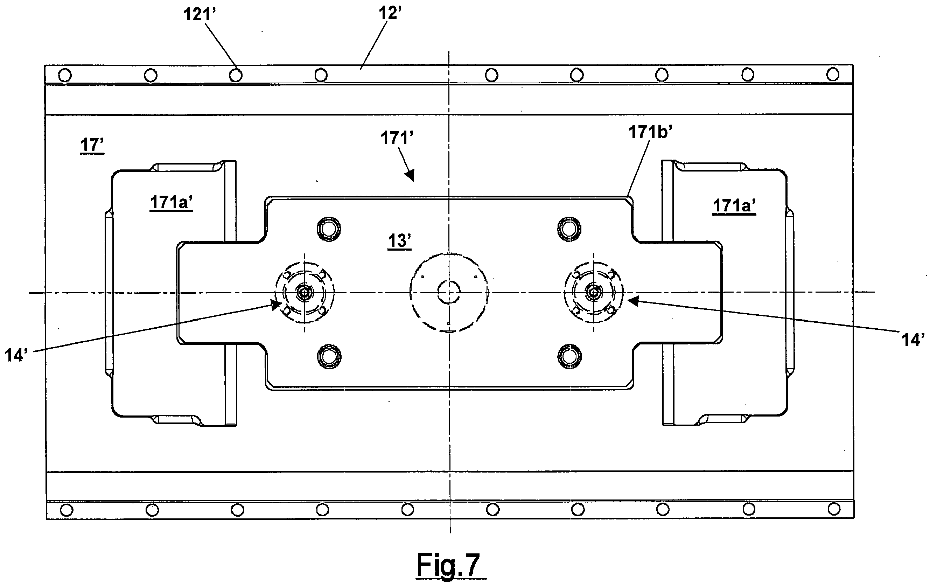

Figures 5, 6 and 7 show a second embodiment of the present invention. The same parts have been indicated with the same reference numbers except followed by an apostrophe. The only substantial difference between the apparatus 11 according to the first embodiment and the apparatus 11' according to the second embodiment is in the position of the two oil-hydraulic pistons 14'. In fact, in the apparatus 11' the two oil-hydraulic pistons 14' are no longer positioned along two outer edges of the ejection plate, but are positioned more internally within the said ejection plate 13'. In the ejection plate two holes are made within which the bodies of the two oil-hydraulic pistons 14' are introduced.

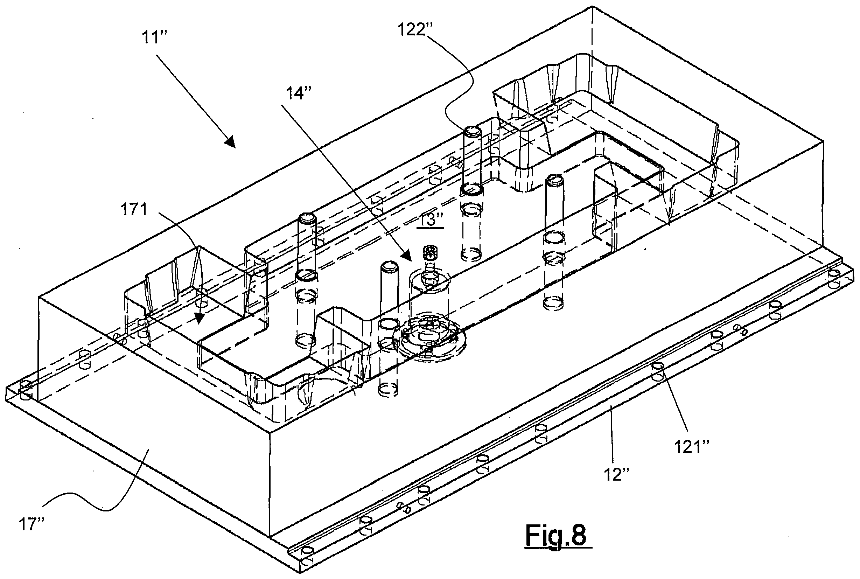

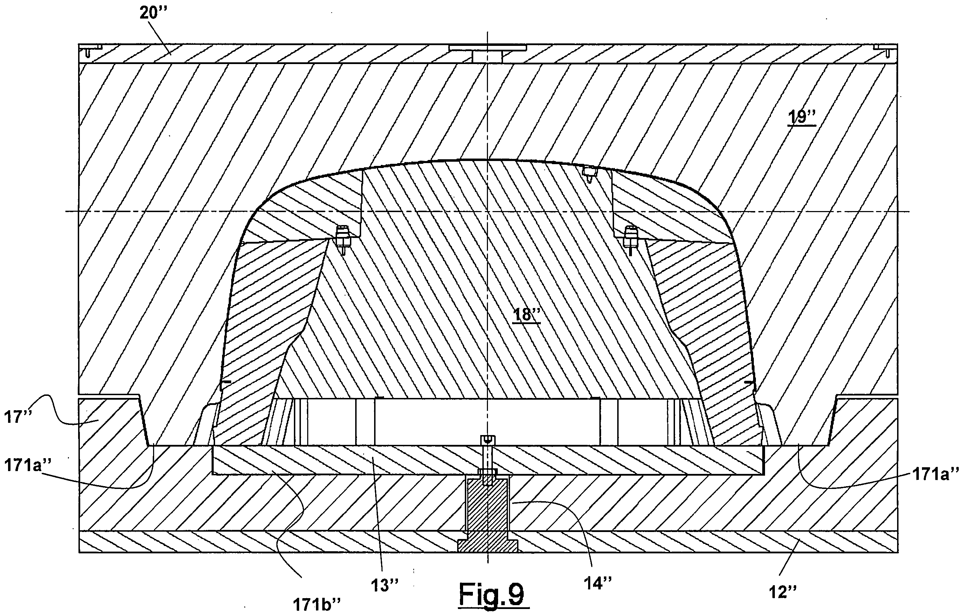

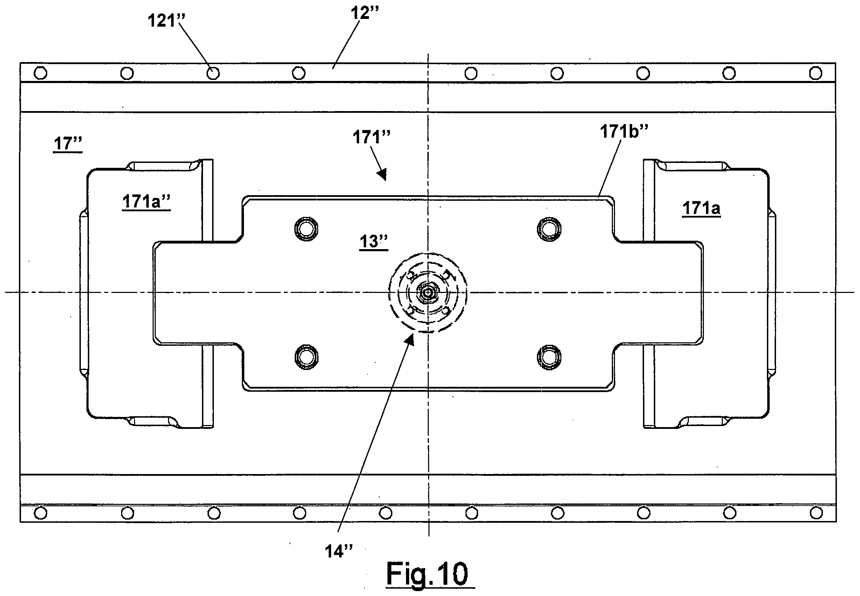

Figures 8, 9 and 10 show a third embodiment of the present invention. The same parts have been indicated with the same reference numbers except followed by a double apostrophe. Unlike the apparatus 11 and 11' according to the first and the second embodiment, the apparatus 11" comprises only one oil-hydraulic piston 14" which is positioned substantially in the middle of the mould. In the ejection plate 13" there is only one central hole within which the body of the oil-hydraulic piston 14" is introduced. Of course, the size of the single oil-hydraulic piston 14" is such as to be able to exert a pressure equal to that exerted by the two oil-hydraulic pistons 14 and 14".

## Claims

1. Apparatus (11, 11', 11") for the manufacture of injection-moulded plastic parts, comprising:
a back plate (12, 12', 12"),
a core (18),
a core frame (17, 17', 17") fixed to said back plate,
an ejection plate (13, 13', 13") and
a set of ejection pistons (14, 14', 14") for moving said ejection plate with respect to said back plate, **characterized in that**
a) the core frame (17, 17', 17") is shaped in such a way as to comprise a recess (171) for the ejection plate (13, 13', 13"),
b) said ejection plate (13, 13', 13") is arranged between said core (18) and said core frame (17, 17', 17"),
c) said set of ejection pistons (14, 14', 14") consists either of a single oil-hydraulic central piston (14") or of a first and a second oil-hydraulic pistons (14, 14') situated within the mould profile.

2. Apparatus (11, 11', 11") according to Claim 1, **characterized in that** the core frame (17, 17', 17") is made as one piece and is worked in such a way as to form the above recess (171, 171', 171 ").

3. Apparatus (11, 11', 11") according to Claim 1, **characterized in that** the core frame (17, 17', 17") is made as two or more pieces suitably shaped which, when they are joined together, form the above recess (171, 171', 171").

4. Apparatus (11, 11', 11") according to Claim 1, **characterized in that** the first and the second oil-hydraulic piston (14, 14') are situated along a middle longitudinal plane of the apparatus.

5. Apparatus (11, 11', 11") according Claim 1, **characterized in that** the single oil-hydraulic central piston (14") or the first oil-hydraulic piston (14, 14') and the second oil-hydraulic piston (14, 14') are partially inset in the thickness of the back plate (12, 12', 12").

## Patentansprüche

1. Vorrichtung (11, 11', 11") zum Herstellen spritzgegossener Plastikteile, umfassend:
eine Rückplatte (12, 12', 12"),
einen Kern (18),
einen Kernrahmen (17, 17', 17"), der an der Rückplatte befestigt ist,
eine Auswurfplatte (13, 13', 13") und
einen Satz Auswurfkolben (14, 14', 14") zum Bewegen der Auswurfplatte relativ zu der Rückplatte, **dadurch gekennzeichnet, dass**
a) der Kernrahmen (17, 17', 17") so geformt ist, dass er eine Aussparung (171) für die Auswurfplatte (13, 13', 13") umfasst,
b) die Auswurfplatte (13, 13', 13") zwischen dem Kern (18) und dem Kernrahmen (17, 17', 17") angeordnet ist,
c) der Satz Auswurfkolben (14, 14', 14") entweder aus einem einzelnen ölhydraulischen Zentralkolben (14") oder aus einem ersten und einem zweiten ölhydraulischen Kolben (14, 14') besteht, die in dem Formprofil angeordnet sind.

2. Vorrichtung (11, 11', 11") gemäß Anspruch 1, **dadurch gekennzeichnet, dass** der Kernrahmen (17, 17', 17") gebildet ist als ein Stück und so gearbeitet ist, dass er die obige Aussparung (171, 171', 171 ") bildet.

3. Vorrichtung (11, 11', 11") gemäß Anspruch 1, **dadurch gekennzeichnet, dass** der Kernrahmen (17, 17', 17") gebildet ist als zwei oder mehr passend geformte Stücke, die, wenn sie zusammengefügt werden, die obige Aussparung (171, 171', 171") bilden.

4. Vorrichtung (11, 11', 11") gemäß Anspruch 1, gekennzeichnet, dass der erste und der zweite ölhydraulische Kolben (14, 14') entlang einer mittleren longitudinalen Ebene der Vorrichtung angeordnet sind.

5. Vorrichtung (11, 11', 11") gemäß Anspruch 1, **dadurch gekennzeichnet, dass** der einzelne ölhydraulische Zentralkolben (14") oder der erste ölhydraulische Kolben (14, 14') und der zweite ölhydraulische Kolben (14, 14') teilweise in die Dicke der Rückplatte (12, 12', 12") eingefügt sind.

## Revendications

1. Appareil (11, 11', 11") pour la fabrication de pièces en plastique moulées par injection comprenant :
une plaque arrière (12, 12', 12"),
un noyau (18),
un bâti de noyau (17, 17', 17") fixé à ladite plaque arrière,
une plaque d'éjection (13, 13', 13"), et
un ensemble de pistons d'éjection (14, 14', 14") pour déplacer ladite plaque d'éjection par rapport à ladite plaque arrière, **caractérisé en ce que** ;
a) le bâti de noyau (17, 17', 17") est formé afin de comprendre un évidement (171) pour la plaque d'éjection (13, 13', 13"),
b) ladite plaque d'éjection (13, 13', 13") est agencée entre ledit noyau (18) et ledit bâti de noyau (17, 17', 17"),
c) ledit ensemble de pistons d'éjection (14, 14', 14") est constitué d'un seul piston central à huile hydraulique (14") ou d'un premier et d'un second piston à huile hydraulique (14, 14') situé à l'intérieur du profil de moule.

2. Appareil (11, 11', 11") selon la revendication 1, **caractérisé en ce que** le bâti de noyau (17, 17', 17") est réalisé d'un seul tenant et est travaillé afin de former l'évidement (171, 171', 171") ci-dessus.

3. Appareil (11, 11', 11") selon la revendication 1, **caractérisé en ce que** le bâti de noyau (17, 17', 17") est réalisé avec deux pièces ou plus formées de manière appropriée qui, lorsqu'elles sont assemblées, forment l'évidement (171, 171', 171") ci-dessus.

4. Appareil (11, 11', 11") selon la revendication 1, **caractérisé en ce que** le premier et le second piston hydraulique à huile (14, 14') sont situés le long d'un plan longitudinal central de l'appareil.

5. Appareil (11, 11', 11") selon la revendication 1, **caractérisé en ce que** l'unique piston central hydraulique à huile (14") ou le premier piston hydraulique à huile (14, 14') et le second piston hydraulique à huile (14, 14') sont partiellement insérés dans l'épaisseur de la plaque arrière (12, 12', 12").
